# EUROPÄISCHE PATENTANMELDUNG

(11) **EP 0 619 336 A2**
(43) Veröffentlichungstag der Anmeldung: **12.10.1994**
(21) Anmeldenummer: 94101692.5
(22) Anmeldetag: 04.02.1994
(51) Int. Cl.: C08G 69/26, C08G 69/30

(54) **Farblose und transparente, amorph zu verarbeitende Polyamidformmassen mit guter Spannungsrissbeständigkeit und Schlagzähigkeit**

(30) Priorität: 03.04.1993 DE 4310970
(71) Anmelder: HÜLS AKTIENGESELLSCHAFT, D-45764 Marl (DE)
(72) Erfinder: Wenzel, Markus, Dr., D-45657 Recklinghausen (DE); Oenbrink, Georg, Dr., D-48249 Dülmen (DE); von der Bey-Dahm, Eva, Dr., D-45721 Haltern (DE)

(57) **Zusammenfassung**

Farblose und transparente, amorph zu verarbeitende Polyamidformmassen mit guter Spannungsrißbeständigkeit und Schlagzähigkeit.

Farblose und transparente, amorph zu verarbeitende Polyamidformmassen mit guter Spannungsrißbeständigkeit und Schlagzähigkeit, beständig gegen Alkohole, Ester, Ketone, Kraftstoffe und kochendes Wasser, wobei sie
I. aliphatische Dicarbonsäuren und
   II. a) 35 - 60 Mol-% trans,trans-Bis-(4-aminocyclohexyl)-methan
   und
   II. b) 65 - 40 Mol-% anderer aliphatische, cycloaliphatische, araliphatische oder aromatische Diamine
als Ausgangskomponenten enthalten, und das Verhältnis der Komponenten I und II im Bereich von 0,95 bis 1,05 zu 1, bevorzugt 0,98 bis 1,02 zu 1, variiert.

Die Polyamidformmassen eignen sich besonders zur Verwendung für Brillengestelle, Apparateschaugläser sowie -abdeckungen und Leuchtenabdeckungen.

## Beschreibung

Gegenstand der Erfindung sind farblose und transparente, amorph zu verarbeitende Polyamidformmassen, die sich durch gute Spannungsrißbeständigkeit gegenüber Alkoholen, Estern, Ketonen und Kraftstoffen, durch Beständigkeit gegenüber kochendem Wasser und besondere Schlagzähigkeit auszeichnen.

Kochwasserbeständige transparente Polyamide sind bekannt. So werden beispielsweise in EP-A 0 050 742, EP-A 0 069 700, US 2 696 482, US 3 597 400, US 4 207 411 und US 4 369 305 amorphe, transparente Polyamide auf Basis aromatischer Dicarbonsäuren wie Isophthalsäure und/oder Terephthalsäure und aliphatischen und/oder cycloaliphatischen Diaminen wie Bis-(4-amino-cyclohexyl)-methan (PACM) beschrieben.

Polyamide mit aromatischen Einheiten sind zwar transparent, aber nicht völlig farblos, sondern zeigen, insbesondere nach Verarbeitung, einen leichten gelben oder beigen Farbstich.

US 2 512 606 und DE-0S 20 34 541 beschreiben transparente Polyamide aus ausschließlich aliphatischen und cycloaliphatischen Komponenten.

Polyamide nach US 2 512 606 bestehen aus aliphatischen Dicarbonsäuren mit 6 - 10 C-Atomen und PACM mit einem trans,trans-Anteil unter 30 %. Diese Polyamide sind gegenüber kochendem Wasser und Lösungsmitteln nicht beständig, wie auch die übrigen Polyamide des Standes der Technik ungenügende Spannungsrißbeständigkeit gegenüber z. B. Alkoholen, Estern, Ketonen aufweisen.

In vielen Anwendungen stehen transparente Polyamide jedoch in Kontakt mit diesen Solventien in flüssiger Form oder in einer damit angereicherten Atmosphäre, so daß Beständigkeit gegenüber diesen Medien unbedingte notwendig ist.

Solche Anwendungen sind zum Beispiel Brillengestelle, Apparateschaugläser, und -abdeckungen oder Leuchtenabdeckungen.

DE-OS 20 34 541 schließlich beschreibt Polyamide auf Basis PACM mit einem t,t-Anteil von 40 - 20 % und 3-Ethyl-1,10-dekandicarbonsäure. Insbesondere wird darin auf Seite 5, 2. Absatz behauptet: "*In eigenen Versuchen wurde gefunden, daß Polyamide aus dem vorerwähnten Diamin und Dodekandisäure trübe sind*".

In "Macromolecules, 4, 1971, S. 347 f." werden Polyamide aus linearen Dicarbonsäuren und PACM mit 51 % trans,trans-Gehalt beschrieben. Wie der dort abgebildeten Tabelle I auf Seite 348 zu entnehmen ist, sind diese Polyamide jedoch kristallin.

Aufgabe war es, farblose und transparente, amorph zu verarbeitende Polyamidformmassen bereitzustellen, die die o. g. Nachteile des Standes der Technik nicht besitzen.

Es wurde überraschend gefunden, daß geeignete Polyamid- und Copolyamidformmassen auf Basis von linearen, aliphatischen Dicarbonsäuren und Bis-(4-amino-cyclohexyl)-methan herzustellen sind, wenn der Anteil des trans,trans-Isomeren in der Diaminkomponente beziehungsweise im Isomerengemisch mindestens 35 Gew.-% und höchstens 60 Mol -% beträgt.

Gegenstand der vorliegenden Erfindung sind demnach farblose und transparente, amorph zu verarbeitende Polyamidformmassen mit guter Spannungsrißbeständigkeit und Schlagzähigkeit, beständig gegen Alkohole, Ester, Ketone, Kraftstoffe und kochendes Wasser, wobei sie
I. lineare aliphatische Dicarbonsäuren und
   II. a) 35 - 60 Mol-% trans,trans-Bis-(4-aminocyclohexyl)-methan
   und
   II. b) 65 - 40 Mol-% andere aliphatische, cycloaliphatische, araliphatische oder aromatische Diamine
als Ausgangskomponenten enthalten und das Verhältnis der Komponenten I und II im Bereich von 0,95 bis 1,05 zu 1, bevorzugt 0,98 bis 1,02 zu 1, variiert.

Weiterhin ist Gegenstand dieser Erfindung ein Verfahren zur Herstellung von farblosen und transparenten, amorph zu verarbeitenden Polyamidformmassen mit guter Spannungsrißbeständigkeit und Schlagzähigkeit, beständig gegen Alkohole, Ester, Ketone, Kraftstoffe und kochendes Wasser, dadurch gekennzeichnet, daß
I. aliphatische Dicarbonsäuren und
   II. a) 35 - 60 Mol-% trans,trans-Bis-(4-aminocyclohexyl)-methan
   und
   II. b) 65 - 40 Mol-% anderer aliphatische, cycloaliphatische, araliphatische oder aromatische Diamine
in der Schmelze bei 250 bis 320 °C polykondensiert werden, wobei das Verhältnis der Komponenten I und II im Bereich von 0,95 bis 1,05 zu 1, bevorzugt 0,98 bis 1,02 zu 1, variiert.

Überraschend und entgegen der Aussage nach DE 20 34 541, Seite 5, 2. Absatz wurde gefunden, daß genau mit diesem Anteil an trans,trans-Isomeren II a ein transparentes Polyamid resultiert, welches sich zudem durch gute Spannungsrißbeständigkeit und Schlagzähigkeit auszeichnet.

In Kontakt mit kochendem Wasser sowie Alkoholen, Estern, Ketonen und Kraftstoffen wird die Transparenz auch über einen längeren Zeitraum nicht beeinträchtigt. Die Tranpsarenz der erfindungsgemäßen Polyamidformmassen bleibt außerdem überraschend erhalten, wenn sie bei erhöhter Temperatur an Luft gelagert werden.

Als Diaminkomponente II b können natürlicherweise Mischungen der beiden anderen verbleibenden Isomeren - cis,cis-PACM und cis,trans-PACM - verwendet werden. Weiterhin können aber auch andere aliphatische, cycloaliphatische oder araliphatische Diamine als Diaminkomponente II b allein oder in Mischungen Anwendung finden. Dabei bestimmt das gewünschte Eigenschaftsprofil der Endprodukte die Wahl. Ganz besonders bevorzugt werden jedoch lineare aliphatische Diamine wie Hexamethylen- oder Decamethylendiamin.

Der bevorzugte Bereich des trans,trans-Gehaltes der Komponente II a ergibt sich je nach Anwendungszweck und kann von dem Fachmann auf diesem Gebiet leicht durch einige orientierende Versuche ermittelt werden. Gemäß der Erfindung umfaßt dieser Bereich 35 bis 60 Mol-%, bevorzugt jedoch 40 bis 55 Mol-%, besonders bevorzugt 45 bis 50,5 Mol-% t,t-PACM.

Als Säurekomponente I eignen sich lineare Dicarbonsäuren mit 6 bis 20 Kohlenstoffatomen, wie z. B. Octan-, Decan-, Dodecan-, Tridecandisäure. Besonders bevorzugt sind n-Decan- (n-Sebazinsäure) und n-Dodecandisäure.

Die linearen aliphatischen Dicarbonsäuren können teilweise - d. h. bis zu 25 Mol-% - durch verzweigte aliphatische Dicarbonsäuren wie 2-Methylnonandisäure oder dimere Fettsäuren wie z. B. PRIPOL® 1009 (Fa. Unichema) ersetzt werden.

Die Herstellung der erfindungsgemäßen Polyamide erfolgt nach dem üblichen Verfahren mittels Polykondensation in der Schmelze, gegebenenfalls in Gegenwart eines Polykondensationskatalysators. Als Katalysator sind z. B. geeignet P-haltige Verbindungen der Formel H₃POₙ mit n = 2, 3 oder 4 in Mengen von 0,001 - 0,5 Gew. -% bezogen auf die Einsatzstoffe. Die Polykondensation wird bei Temperaturen im Bereich von 250 - 320 °C, vorteilhaft bei 270 - 290 °C, in einem Polykondensationsreaktor ggf. zusätzlich mit einem nachgeschalteten Entgasungsextruder oder Dünnschichtverdampfer batchweise oder kontinuierlich durchgeführt.

Die Formmassen können neben den Polyamiden noch übliche Hilfs- und Zusatzstoffe wie Pigmente, Stabilisatoren, Füllstoffe etc. enthalten.

Sie können nach üblichen Verfahren wie Spritzguß, Extrusion o. ä. zur Formteilen, Fasern und Folien verarbeitet werden.

Die relativen Lösungsviskositäten ηrel wurden an 0,5 Gew.-%igen Polyamidlösungen in m-Kresol bei 25 °C bestimmt.

Die Glastemperaturen T_{g}, Kristallisationstemperaturen Tₖ und Schmelzpunkte Tₘ resultieren aus DSC-Messungen bei Aufheizraten von 20 K/min.

Die transparenten Polyamidformmassen lassen sich vielseitig verwenden. Aufgrund ihrer Eigenschaften sind sie jedoch besonders geeignet für Brillengestelle als auch für Apparateschaugläser sowie -abdeckungen und Leuchtenabdeckungen, speziell im Außenbereich und an Stellen an denen eine Belastung der Gegenstände mit Chemikalien häufig auftritt, wie z. B. an Tankstellen.

Die nachfolgenden Beispiele dienen der Erläuterung der Erfindung.

### Beispiel 1:

- Einsatzstoffe:: 23,030 kg Dodecandisäure (100 mol)
21,204 kg Bis-(4-aminocyclohexyl)-methan, tr-tr-Gehalt 49,1 % (100,8 mol)
35,387 kg Wasser
4,4 g 50%ige wäßrige H₃PO₂

Die Einsatzstoffe wurden in Nasser unter Stickstoff in einem Polykondensationsreaktor unter Druck bei 170 °C gelöst. Die Temperatur wurde auf 215 °C erhöht und 1 h bei dieser Temperatur gerührt, der Enddruck betrug 20 bar. Nach weiterer Temperaturerhöhung auf 280 °C wurde unter kontinuierlichem Entspannen des Drucks eingesetztes und durch die Polykondensation entstandenes Wasser abdestilliert. Nach 2 h Reaktionszeit bei 280 °C wurde das Polyamid aus dem Reaktor ausgefahren. Die Beträge der Kristallisations- und Schmelzenthalpie sind gleich.
- ηrel = 1,84: T_{g} = 140 °C
Tₖ = 180 °C
Tₘ = 248 °C

### Beispiel 2:

- Einsatzstoffe:: 20,224 kg Sebacinsäure (100 mol)
21,204 kg Bis-(4-aminocyclohexyl)-methan, tr,tr-Gehalt 49,1 % (100,8 mol)
23,614 kg Wasser
2,07 g 100%ige H₃PO₃

Die Reaktionsführung erfolgte analog Beispiel 1.
- ηrel = 1,63: T_{g} = 149 °C
Tₖ = 181 °C
Tₘ = 269 °C
Die Beträge der Kristallisations- und Schmelzenthalpie sind gleich. Die Produkte sind transparent und farblos.

Die nach den Beispielen 1 und 2 hergestellten Polyamide sowie zum Vergleich das transparente Polyamid aus Terephthalsäure und Trimethylhexamethylendiamin (TROGAMID® T 5000 der Hüls AG) und GRILAMID® TR 55 der Firma Ems (Isophthalsäure, Laurinlactam, 3,3'-Dimethyl-PACM) wurden zur Beurteilung der Kochwasserbeständigkeit in Wasser bei 100 °C gelagert. Die Vergleichsprodukte zeigten Veränderungen in Gestalt von Eintrübung und Verkleben. Dagegen konnten die erfindungsgemäßen Polyamide 9 Monate ohne Veränderung in kochendem Wasser gelagert werden.

Zur Beurteilung der Spannungsrißbeständigkeit wurde ein Spannungsrißkorrosionstest in Anlehnung an DIN 53 449 Teil 3 ausgeführt. Im Gegensatz zu den Vergleichspolyamiden, bei denen Spannungsrißbildung oder gar Probekörperbruch zu beobachten war, blieben die erfindungsgemäßen Polyamide fehlerfrei im Kontakt mit Methanol, Isopropanol, Aceton, Ethylacetat und Toluol.

In Kerbschlagzähigkeitsprüfungen nach ISO 180/1A wurde das Polyamid nach Beispiel 1 mit TROGAMID® T 5000 und GRILAMID® TR 55 verglichen:

| Temperatur [°C] | Kerbschlagzähigkeit [kJ/m²] nach ISO 180/1A | | |
|---|---|---|---|
| | Beispiel 1 | TROGAMID® T 5000 | GRILAMID® TR 55 |
| 23 | 20 | 12 | 7 |
| 0 | 15 | 8 | 5 |
| -40 | 10 | 5 | 3 |

## Patentansprüche

1. Farblose und transparente, amorph zu verarbeitende Polyamidformmassen mit guter Spannungsrißbeständigkeit und Schlagzähigkeit, beständig gegen Alkohole, Ester, Ketone, Kraftstoffe und kochendes Wasser, dadurch gekennzeichnet, daß sie
I. lineare aliphatische Dicarbonsäuren und
II.a) 35 - 60 Mol-% trans,trans-Bis-(4-aminocyclohexyl)-methan
und
II. b) 65 - 40 Mol-% andere aliphatische, cycloaliphatische, araliphatische oder aromatische Diamine
als Ausgangskomponenten enthalten, wobei das Verhältnis der Komponenten I und II im Bereich von 0,95 bis 1,05 zu 1, bevorzugt 0,98 bis 1,02 zu 1, variiert.

2. Polyamidformmassen gemäß Anspruch 1,
dadurch gekennzeichnet,
daß sie als Komponente I lineare Dicarbonsäuren mit 6 bis 14 Kohlenstoffatomen oder Mischungen davon enthalten.

3. Polyamidformmassen nach den Ansprüchen 1 bis 2,
dadurch gekennzeichnet,
daß sie Octan-, Decan-, Dodecan-, Tridecandisäure oder Mischungen davon enthalten.

4. Polyamidformmassen nach den Ansprüchen 1 bis 3,
dadurch gekennzeichnet,
daß sie n-Decan- und/oder n-Dodecandisäure enthalten.

5. Polyamidformmassen gemäß den Ansprüchen 1 bis 4,
dadurch gekennzeichnet,
daß sie 35 - 60 Mol-% Komponente II a und 65 - 40 Mol-% anderer Isomere von Bis-(4-aminocyclohexyl)-methan als Komponente II b enthalten.

6. Polyamidformmassen gemäß den Ansprüchen 1 bis 5,
dadurch gekennzeichnet,
daß sie als Komponente II b lineare aliphatische, cycloaliphatische oder araliphatische Diamine oder Mischungen derselben enthalten.

7. Polyamidformmasse gemäß den Ansprüchen 1 bis 6,
dadurch gekennzeichnet,
daß sie als Komponente II b Hexamethylendiamin, Decamethylendiamin, m-, Dodecamethylendiamin, Bis-(4-amino-3-methyl)-cyclohexylamin, Trimethylhexamethylendiamin oder deren Mischungen enthalten.

8. Polyamidformmassen gemäß den Ansprüchen 1 bis 7,
dadurch gekennzeichnet,
daß sie 40 bis 55 Mol-% der Komponente II a enthalten.

9. Polyamidformmassen gemäß den Ansprüchen 1 bis 8,
dadurch gekennzeichnet,
daß sie 45 bis 50,5 Mol-% der Komponente II a enthalten.

10. Verfahren zur Herstellung von farblosen und transparenten, amorph zu verarbeitenden Polyamidformmassen mit guter Spannungsrißbeständigkeit und Schlagzähigkeit, beständig gegen Alkohole, Ester, Ketone, Kraftstoffe und kochendes Wasser,
dadurch gekennzeichnet, daß
I. aliphatische Dicarbonsäuren und
11. a) 35 - 60 Mol-% trans,trans-Bis-(4-aminocyclohexyl)-methan
und
II. b) 65 - 40 Mol-% anderer aliphatische, cycloaliphatische, araliphatische oder aromatische Diamine
in der Schmelze bei 250 bis 320 °C polykondensiert werden, wobei das Verhältnis der Komponenten I und II im Bereich von 0,95 bis 1,05 zu 1, bevorzugt 0,98 bis 1,02 zu 1, variiert.

11. Verfahren zur Herstellung von Polyamidformmassen nach Anspruch 10,
dadurch gekennzeichnet,
daß die Temperatur 270 bis 290 °C beträgt.

12. Verfahren zur Herstellung von Polyamidformmassen nach den Ansprüchen 10 bis 11,
dadurch gekennzeichnet,
daß die Polykondensation in Gegenwart von 0,001 - 0,5 Gew.-% Phosphor-haltiger Katalysatoren der Formel H₃POₙ durchgeführt wird, wobei n = 2, 3 oder 4 bedeuten kann.

13. Verfahren zur Herstellung von Polyamidformmassen nach den Ansprüchen 10 bis 12,
dadurch gekennzeichnet,
daß zusätzlich ein Entgasungsextruder oder Dünnschichtverdampfer verwendet wird.

14. Farblose und transparente, amorph zu verarbeitende Polyamidformmassen mit guter Spannungsrißbeständigkeit und Schlagzähigkeit, beständig gegen Alkohole, Ester, Ketone, Kraftstoffe und kochendes Wasser, erhalten durch Polykondensation in der Schmelze bei 250 - 320 °C von
I. lineare aliphatische Dicarbonsäuren und II.a) 35 - 60 Mol-% trans,trans-Bis-(4-aminocyclohexyl)-methan
und
II. b) 65 - 40 Mol-% andere aliphatische, cycloaliphatische, araliphatische oder aromatische Diamine,
wobei das Verhältnis der Komponenten I und II im Bereich von 0,95 bis 1,05 zu 1, bevorzugt 0,98 bis 1,02 zu 1, ist.

15. Verwendung der Polyamidformmassen für Brillengestelle, Apparateschaugläser sowie -abdeckungen und Leuchtenabdeckungen.
